# EUROPÄISCHE PATENTSCHRIFT

(11) **EP 3 712 570 B1**
(45) Veröffentlichungstag und Bekanntmachung des Hinweises auf die Patenterteilung: **06.03.2024**
(21) Anmeldenummer: 20163223.9
(22) Anmeldetag: 16.03.2020
(51) Int. Cl.: G01F 1/50, G01F 1/38, G01F 1/684, G01F 1/34, G01F 1/37, F23D 99/00, F23N 1/00

(54) **VERFAHREN UND ANORDNUNG ZUR MESSUNG EINES STRÖMUNGSPARAMETERS IN ODER AN EINER VON EINEM FLUID DURCHSTRÖMBAREN VORRICHTUNG**
METHOD AND ASSEMBLY FOR MEASURING A FLOW PARAMETER IN OR ON A DEVICE THROUGH WHICH A FLUID CAN FLOW
PROCÉDÉ ET AGENCEMENT POUR LA MESURE D'UN PARAMÈTRE DE DÉBIT DANS OU SUR UN DISPOSITIF POUVANT ÊTRE TRAVERSÉ PAR UN FLUIDE

(30) Priorität: 22.03.2019 DE 102019107370
(43) Veröffentlichungstag der Anmeldung: 23.09.2020
(73) Patentinhaber: Vaillant GmbH, 42859 Remscheid (DE)
(72) Erfinder: Heitmann, Jan, 28285 Gevelsberg (DE); Altendorf, Frank, 51467 Bergisch Gladbach (DE)
(74) Vertreter: Popp, Carsten

(56) Entgegenhaltungen:
- EP-A1- 3 222 978
- EP-A1- 3 222 980
- CN-A- 108 759 951
- DE-U1- 9 315 513
- US-A- 5 086 655
- US-A- 5 469 749
- US-A1- 2008 053 196
- US-A1- 2012 107 752
- US-A1- 2014 260 513
- US-A1- 2017 115 149
- US-B1- 9 638 559

## Beschreibung

Die Erfindung betrifft ein Verfahren und eine Anordnung zur Messung eines Strömungsparameters in oder an einer von einem Fluid, insbesondere einem Gas, durchströmbaren Vorrichtung. Dabei kann es sich um beispielsweise um eine Differenzdruckmessung, eine Durchflussmessung, insbesondere eine Massenstrom- oder Volumenstrommessung, oder dergleichen handeln. Speziell geht es besonders um Messungen mit elektronischen Sensoren an Geräten der Heiz- und/oder Klimatechnik. Solche Messungen werden zur Überwachung und/oder Steuerung und Regelung von vielen Geräten eingesetzt und müssen über lange Zeiträume möglichst zuverlässig und genau arbeiten, sollen aber kostengünstig sein.

Zur Erhöhung der Sicherheit, der Messgenauigkeit und zur Schaffung von Möglichkeiten für eine Fehlererkennung können wichtige Messgeräte zwei- oder mehrfach vorgesehen werden. Insbesondere bei hohen Sicherheitsanforderungen, z. B. bei Flugzeugen, Kraftwerken oder chemischen Anlagen, können Messsysteme redundant und diversitär ausgelegt werden. Durch Vergleich der gemessenen Werte können viele Arten von Fehlern erkannt und Ausfälle mindestens eines Sensors kompensiert werden.

Allerdings ist es bei solchen Messsystemen typischerweise möglich, eine regelmäßige Kalibrierung und/oder Wartung vorzunehmen, so dass die Systeme nicht für die Erkennung einiger Arten von Fehlern geeignet sein müssen und es auch nicht sind. Insbesondere sind hier langsam zunehmende Verschmutzungen, Korrosion, aber auch Langzeitveränderungen (Linearitäts- und Verstärkungsdrift) in den Kalibrierkurven (Messwert-Signal-Kurven) und von deren Nullpunkt (Offsetdrift) zu nennen. Bei Geräten, die lange Zeit auch ohne Nachkalibrierung oder Wartung der Messsysteme genau geregelt und sicher betrieben werden sollen, ist die Erkennung und Kompensation solcher Effekte jedoch wünschenswert. Das gilt insbesondere für in großen Stückzahlen gebaute mit Brenngas betriebene Heizgeräte für Haushalte und dergleichen. In solchen Geräten werden bisher bei hohen Anforderungen an die Betriebssicherheit z. B. zwei identische Sensoren in identischer Konstellation eingebaut, deren Messsignale verglichen werden. Dadurch können Ausfall eines Sensors oder bestimmte Fehler kompensiert werden, aber es gibt, wenn man keine Nachkalibrierung vornehmen kann, kaum Möglichkeiten, Verschmutzungen beider Sensoren zu erkennen oder Langzeitveränderungen an den Sensoren festzustellen und möglicherweise zu kompensieren.

Aus den Druckschriften DE 101 27 261 A1, DE 10 2005 023 115 A1, DE 10 2010 040 396 A1, DE 10 2012 012 252 A1, DE 10 2016 011 256 A1, US 2003/0 167 836A1 und EP 0 465 182 A2 sind Anordnungen mit redundanten und räumlich getrennten Sensoren bekannt. DE 9315513 U1 offenbart eine Einrichtung zur Erfassung eines Abgas-Volumenstromes eines gasbetriebenen Wasserheizers mit einem in einer Abgasleitung angeordneten Sensor, wobei die Drehzahl eines Gebläses in Abhängigkeit vom erfassten Abgas-Volumenstrom geregelt wird.

Aufgabe der Erfindung ist es, eine Anordnung und ein Verfahren zu schaffen, die die beschriebenen Probleme zumindest teilweise löst. Insbesondere sollen geeignete Messsysteme geschaffen werden, deren Vergleich auch Rückschlüsse auf eventuelle Verschmutzungen oder Langzeitveränderungen zulässt. Ein weiteres Ziel der Erfindung ist es, eine kompakte und preisgünstig herstellbare und montierbare Anordnung zu schaffen.

Zur Lösung dieser Aufgabe dienen eine Anordnung und ein Verfahren gemäß den unabhängigen Ansprüchen. Vorteilhafte Ausgestaltungen und/oder Weiterbildungen sind in den jeweils abhängigen Ansprüchen angegeben. Die Beschreibung erläutert die Erfindung und führt weitere Ausführungsbeispiele an.

Zur Lösung trägt eine Anordnung zur Messung eines Strömungsparameters an oder in einer von einem Fluid durchströmbaren Vorrichtung mittels elektronischer Sensoren bei, die so eingerichtet ist, dass der Strömungsparameter durch mindestens zwei unabhängige Messsysteme direkt oder indirekt bestimmt werden kann. Mit dem Strömungsparameter ist hierbei ein Massenstrom oder ein Volumenstrom einer Strömung gemeint. Die beiden Messsysteme sind zudem so ausgestaltet, dass sie sich in mindestens der Verschmutzungsneigung unterscheiden. Erfindungsgemäß sind alle Sensoren in einem gemeinsamen Gehäuse untergebracht. Dies ist zumindest für Durchflusssensoren in einer Bypass-Leitung mittels geeigneter Anschlussleitungen realisierbar und erlaubt es, die Sensoren, möglicherweise auch gemeinsam mit der zugehörigen Elektronik an einem geeigneten Platz unterzubringen und so den Aufwand für elektrische Leitungen zu verringern. Auf diese Weise können Sensoren und Elektronik in einem gemeinsamen Gehäuse oder sogar auf einer gemeinsamen Platine oder einem gemeinsamen Chip untergebracht werden. Dabei ist die von dem Fluid durchströmbare Vorrichtung ein mit einem Brenngas betriebenes Heizgerät und betrifft der Massenstrom oder der Volumenstrom das Brenngas, zugeführte Umgebungsluft und/oder Abgas. Der erste Sensor ist in einer Bypass-Leitung angeordnet und bildet zusammen mit der Bypass-Leitung das erste Messsystem und der zweite Sensor ist in einer Stichleitung mit einer Öffnung zur Umgebung der Vorrichtung angeordnet und bildet zusammen mit der Stichleitung das zweite Messsystem, wobei jeder Sensor mit einer Auswerteelektronik verbunden ist und die von jeder Auswerteelektronik ermittelten Messwerte für den Massenstrom oder den Volumenstrom einer Vergleichselektronik zuführbar sind, welche dazu eingerichtet ist, mindestens gemessene Werte des Massenstroms oder des Volumenstroms oder ihr zeitliches Verhalten miteinander zu vergleichen, um aus Abweichungen der Messwerte voneinander Schlüsse auf Verschmutzungen zu ziehen, und Ergebnisse des Vergleichs in Form eines Fehlerprotokoll, eines Warnsignals oder eines Abschaltsignals auszugeben.

Am günstigsten ist es, wenn möglichst viele Unterschiede zwischen den beiden Messsystemen bestehen, also zwei oder mehr der Eigenschaften unterschiedlich ausgeführt sind. Durch unterschiedliche Einbaupositionen ist im Allgemeinen eine unterschiedliche Verschmutzung oder unterschiedliche sonstige Schädigung der verwendeten Sensoren zu erwarten, so dass allein dies schon bedeutet, dass man anhand der Messergebnisse Verschmutzungseffekte von anderen Fehlern wie Linearitäts-, Verstärkungs- und/oder Offsetdriften unterscheiden kann. Hilfreich ist es auch, wenn mindestens zwei Sensoren mit unterschiedlichen Messwert-Signal-Kennlinien verwendet werden, weil sich bei deren Vergleich besonders einfach Messwertveränderungen durch Verschmutzung von anderen Veränderungen unterscheiden lassen. Bei Verwendung von Sensoren mit unterschiedlichem (bekanntem) Driftverhalten lassen sich in vielen Fällen andere Fehler von Fehlern durch Langzeitdrift unterscheiden.

Der Strömungsparameter, der von mindestens zwei Sensoren gemessen wird, ist ein Massenstrom oder ein Volumenstrom. Insbesondere wird mittels der Sensoren (direkt oder mittelbar) derselbe Strömungsparameter ermittelt.

Diese Parameter werden typischerweise zur Überwachung, Steuerung und/oder Regelung benötigt, wenn die von einem Fluid durchströmbare Vorrichtung ein mit einem Brenngas betriebenes Heizgerät ist und der Strömungsparameter das Brenngas, zugeführte Umgebungsluft und/oder Abgas betrifft. Der Strömungsparameter kann demnach z. B. ein Massen- oder Volumenstrom des jeweiligen Gasstromes sein.

Besonders günstig für die Feststellung von Verunreinigungen ist es, wenn die Anordnung mindestens zwei unterschiedliche Strömungswege aufweist, in denen jeweils mindestens ein Sensor angeordnet ist, wobei die Strömungswege so gestaltet sind, dass der jeweilige Sensor direkt oder indirekt den gewünschten Parameter messen kann. Für Durchfluss- oder Differenzdruckmessungen ist es im Allgemeinen nicht erforderlich, dass die gesamte Strömung von einem Sensor erfasst wird. Oft genügt eine repräsentative und durch Versuche kalibrierte Messung in einem Teilbereich, oder einem Bypass der eigentlichen Strömung. Dies macht sich die vorliegende Erfindung zu Nutze, indem zwei unterschiedliche gestaltete Bypässe oder Teilabschnitte für Sensoren genutzt werden.

Jeder Sensor ist mit einer Auswerteelektronik verbunden, und die von jeder Auswerteelektronik ermittelten Messwerte für den Strömungsparameter sind einer Vergleichselektronik zuführbar. Im Normalfall sollten nach einer einmaligen Kalibrierung die Sensoren beide den gleichen Messwert liefern. So können sie einzeln oder gemeinsam zu einer Überwachung oder Regelung benutzt werden. Ohne Verschmutzungen oder Langzeitdrift würde dies im Idealfall auch so bleiben, jedoch im realen Betrieb kann es über lange Zeiträume zu Unterschieden zwischen den beiden Messwerten kommen, die sehr unterschiedliche Ursachen haben können. Bei identischen Sensoren in sehr ähnlichen Einbaupositionen könnte man weder Verschmutzungen noch eine Langzeitdrift erkennen, da beides beide Sensoren in gleicher Weise beeinflussen würde. Mit der Zeit könnte daher eine Regelung zu von gewünschten Sollwerten abweichenden Istwerten führen. Ein Vergleich der Messwerte würde nur zu einer Fehlermeldung führen, wenn die gemessenen Werte sich mehr als zulässig voneinander unterscheiden würden. Eine Ursache dafür wäre aber nicht einfach ermittelbar. Bei unterschiedlichen Sensoren, möglicherweise in unterschiedlichen Einbaupositionen ist eine viel weitergehende Analyse durch die Vergleichselektronik, ggf. unter Einbeziehung von gespeicherten Erfahrungswerten möglich, auch wenn Mehrdeutigkeiten bei der Auswertung nicht immer ausgeschlossen werden können. Bei unterschiedlichen Einbaupositionen weiß man typischerweise, welcher der beiden Sensoren einer stärkeren Verschmutzungsneigung unterworfen ist. Entsprechende Abweichungen der Messwerte können dann als Messwert für den Verschmutzungsgrad des ganzen Systems dienen. Unterschiedliche Messwert-Signal-Kennlinien der Sensoren erlauben es, ggf. wiederum in Verbindung mit gespeicherten Erfahrungswerten, Abweichungen der beiden Messwerte voneinander bei verschiedenen Betriebszuständen als Hinweis auf das Driftverhalten der einzelnen Sensoren auszuwerten. Dies alles erfolgt in der Vergleichselektronik, die dann Ergebnisse des Vergleichs in beliebiger Form ausgeben kann, beispielsweise als Fehlerprotokoll, Warnsignal oder Abschaltsignal.

Jedenfalls aber können die Auswerteelektroniken und die Vergleichselektronik in einem gemeinsamen Gehäuse angeordnet.

Zur Lösung der eingangs genannten Probleme dient auch ein nachfolgend angegebenes Verfahren zur Messung eines Strömungsparameters an oder in einer von einem Fluid durchströmbaren Vorrichtung mittels elektronischer Sensoren, insbesondere bei einer Anordnung wie hier ebenfalls vorgeschlagen. Mit dem Strömungsparameter ist hierbei ein Massenstrom oder ein Volumenstrom einer Strömung gemeint. Dabei ist die von dem Fluid durchströmbare Vorrichtung ein mit einem Brenngas betriebenes Heizgerät und betrifft der Massenstrom oder der Volumenstrom das Brenngas, zugeführte Umgebungsluft und/oder Abgas, wobei jeder Sensor mit einer Auswerteelektronik verbunden ist und die von jeder Auswerteelektronik ermittelten Messwerte für den Massenstrom oder den Volumenstrom einer Vergleichselektronikzugeführt werden. Dabei wird der Strömungsparameter durch mindestens zwei unabhängige Messsysteme direkt oder indirekt bestimmt, wobei die gemessenen Werte des Strömungsparameters und/oder ihr zeitliches Verhalten miteinander verglichen werden, um aus Abweichungen der Messwerte voneinander Schlüsse auf Verschmutzungen zu ziehen und Ergebnisse des Vergleichs in Form eines Fehlerprotokoll, eines Warnsignals oder eines Abschaltsignals ausgegeben werden.

Bevorzugt werden Sensoren, die unterschiedliche Messwert-Signal-Kennlinien aufweisen, die in der jeweiligen Auswerteelektronik gespeichert werden, eingesetzt.

Alternativ zu den bisher beschriebenen Verfahren können die Messwerte der Sensoren auch von einem gemeinsamen Elektronikmodul periodisch nacheinander abgefragt, ausgewertet und miteinander verglichen werden, wobei das Ergebnis des Vergleichs angezeigt und/oder bei Abweichung von vorgegebenen Sollbedingungen eine Störmeldung ausgegeben wird. In modernen Geräten wird für Mess- und Regelaufgaben typischerweise ein Mikroprozessor eingesetzt, was auch bei der vorliegenden Erfindung erfolgen kann. Hier kann auch gleich eine komplexere Auswertung unter Vergleich der gemessenen Werte mit gespeicherten Erfahrungswerten etc. durchgeführt werden. Auch eine drahtlose Anbindung von Sensoren an eine zentrale Auswerteelektronik ist möglich.

Es kann ein Computerprogrammprodukt vorgesehen sein, umfassend Befehle, die bewirken, dass die hier vorgeschlagene Anordnung das erläuterte Verfahren ausführt.

Ein schematisches Ausführungsbeispiel der Erfindung, auf das diese jedoch nicht beschränkt ist, und die Funktionsweise des erfindungsgemäßen Verfahrens werden nun anhand der Figur detailliert erläutert. Es zeigt:
- Fig. 1:: schematisch ein Ausführungsbeispiel einer erfindungsgemäßen Anordnung,
- Fig. 2:: eine Ausführungsvariante des Ausführungsbeispiel aus Figur 1.

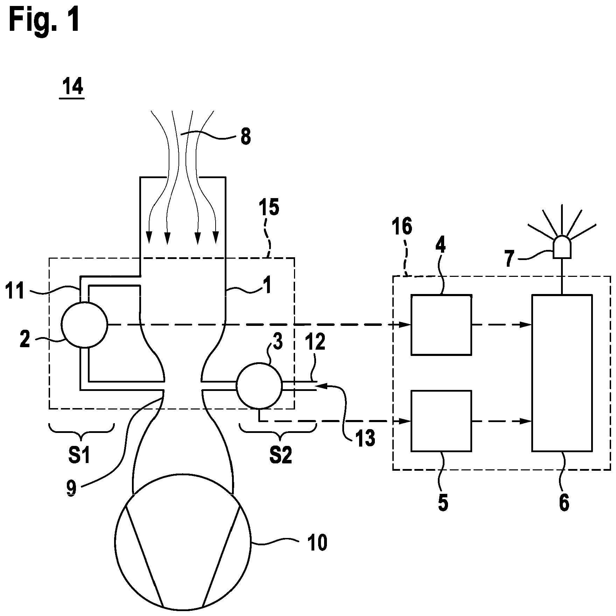

Figur 1 zeigt, dass in einer Vorrichtung 1 ein Fluid, insbesondere ein Gas, von einem Einlass 8 durch eine Verengung 9 zu einem Gebläse 10 strömt. Ein Parameter der Strömung in der Vorrichtung 1 soll gemessen werden, nämlich der Volumenstrom oder der Massenstrom zwischen Umgebung 14 und Verengung 9. Grundsätzlich gibt es viele mögliche einzelne Messanordnungen, mit denen man diese Parameter direkt oder indirekt messen kann. Erfindungsgemäß werden aber zwei verschiedene Messsysteme S1, S2 gleichzeitig eingesetzt, um den gewünschten Strömungsparameter zu bestimmen. Im vorliegenden Ausführungsbeispiel ist zunächst eine Bypass-Leitung 11 mit einem ersten Sensor 2 vorhanden, die parallel zur Strömung in der Vorrichtung 1 angeordnet ist und das Messsystem S1 bildet. Außerdem ist eine Stichleitung 12 mit einer Öffnung 13 zur Umgebung 14 und mit einem zweiten Sensor 3 vorgesehen, die zusammen das Messsystem S2 bilden. Der erste Sensor 2 ist mit einer ersten Auswerteelektronik 4 verbunden, der zweite Sensor 3 mit einer zweiten Auswerteelektronik 5. Beide Auswerteelektroniken 4, 5 sind mit einer Vergleichselektronik 6 verbunden, die die Ergebnisse des Vergleichs der beiden Messwerte mittels einer Anzeigeeinrichtung 7 anzeigen oder auf andere Weise ausgeben kann. Natürlich können die Auswerteelektroniken 4, 5 sowie die Vergleichselektronik 6 in Form eines geeignet konfigurierten Mikroprozessors ausgebildet sein, der die Sensoren 2, 3 nacheinander abfragt und deren Signale weiterverarbeitet. Wichtig ist aber, dass nicht zwei identische Sensoren an praktisch gleichartigen Einbauorten verwendet werden, sondern dass sich die beiden Messsysteme S1 und S2 grundsätzlich unterscheiden. Die Sensoren 2, 3 können z. B. Differenzdruckmesser sein, was besonders dann sinnvoll ist, wenn man Verschmutzungen als Ursache von Messwertabweichungen zwischen den beiden Sensoren von anderen Ursachen unterscheiden will. Offenkundig ist in den beiden Messsystemen eine völlig unterschiedliche Verschmutzungsneigung vorhanden, was eine Eliminierung dieser Ursache ermöglicht. Es können aber auch beispielsweise Durchflussmesser als Sensoren 2, 3 eingesetzt werden. Auch hier würde sich eine Verschmutzung der Vorrichtung unterschiedlich auswirken. Bei unterschiedlichen Sensoren können weitere Fehlerquellen im Langzeitverhalten erkannt werden.

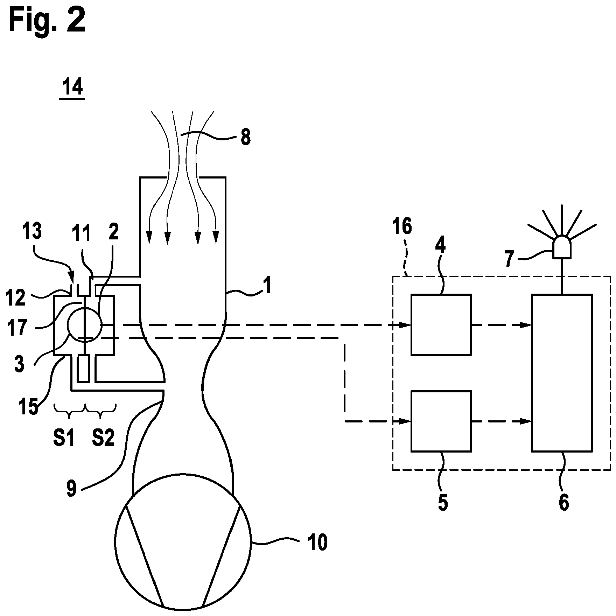

In Figur 2 sind die Sensoren 2, 3 nicht nur in einem gemeinsamen Gehäuse 15, sondern darüber hinaus auf einer gemeinsamen Platine 17 untergebracht. Da gattungsgemäße Sensoren auf einem Chip aufgebracht sind, sind in einer bevorzugten Variante der Erfindung die Sensoren auf einem gemeinsamen Chip untergebracht.

Die vorliegende Erfindung eignet sich besonders für die Regelung von Gasströmen in mit Brenngas betriebenen Heizeinrichtungen und erlaubt zum Beispiel über lange Zeiträume sichere und stabile Regelung des Mischungsverhältnisses von Brenngas und Luft.

## Patentansprüche

1. Anordnung zur Messung eines Massenstroms oder eines Volumenstroms einer Strömung an oder in einer von einem Fluid durchströmbaren Vorrichtung (1) mittels elektronischer Sensoren (2, 3), wobei die von dem Fluid durchströmbare Vorrichtung (1) ein mit einem Brenngas betriebenes Heizgerät ist und der Massenstrom oder der Volumenstrom das Brenngas, zugeführte Umgebungsluft und/oder Abgas betrifft, **dadurch gekennzeichnet, dass** die Anordnung eingerichtet ist, den Massenstrom oder den Volumenstrom durch mindestens zwei unabhängige Messsysteme (S1, S2) zu bestimmen und wobei die beiden Messsysteme (S1, S2) so ausgestaltet sind, dass sie sich in mindestens der Verschmutzungsneigung unterscheiden und dass alle Sensoren (2, 3) in einem gemeinsamen Gehäuse (15) untergebracht sind und der erste Sensor (2) in einer Bypass-Leitung (11) angeordnet ist und zusammen mit der Bypass-Leitung (11) das erste Messsystem (S1) bildet und der zweite Sensor (3) in einer Stichleitung (12) mit einer Öffnung (13) zur Umgebung (14) der Vorrichtung (1) angeordnet ist und zusammen mit der Stichleitung (12) das zweite Messsystem (S2) bildet, wobei jeder Sensor (2, 3) mit einer Auswerteelektronik (4, 5) verbunden ist und die von jeder Auswerteelektronik (4, 5) ermittelten Messwerte für den Massenstrom oder den Volumenstrom einer Vergleichselektronik (6) zuführbar sind, welche dazu eingerichtet ist, zumindest gemessene Werte des Massenstroms oder des Volumenstroms oder ihr zeitliches Verhalten miteinander zu vergleichen, um aus Abweichungen der Messwerte voneinander Schlüsse auf Verschmutzungen zu ziehen, und Ergebnisse des Vergleichs in Form eines Fehlerprotokolls, eines Warnsignals oder eines Abschaltsignals auszugeben.

2. Anordnung nach Anspruch 1, **dadurch gekennzeichnet, dass** alle Sensoren (2, 3) auf einer gemeinsamen Platine (17) montiert sind.

3. Anordnung nach Anspruch 1, **dadurch gekennzeichnet, dass** alle Sensoren (2, 3) auf einem gemeinsamen Chip untergebracht sind.

4. Anordnung nach einem der vorhergehenden Ansprüche, wobei in dem Gehäuse (15) auch die Auswerteelektroniken (4, 5) und die Vergleichselektronik (6) angeordnet sind.

5. Verfahren zur Messung eines Massenstroms oder eines Volumenstroms einer Strömung an oder in einer von einem Fluid durchströmbaren Vorrichtung (1) mittels elektronischer Sensoren (2, 3), wobei die von dem Fluid durchströmbare Vorrichtung (1) ein mit einem Brenngas betriebenes Heizgerät ist und der Massenstrom oder der Volumenstrom das Brenngas, zugeführte Umgebungsluft und/oder Abgas betrifft, **dadurch gekennzeichnet, dass** das Verfahren mit einer Anordnung nach einem der vorhergehenden Ansprüche durchgeführt wird.

6. Verfahren nach Anspruch 5, wobei die Sensoren (2, 3) unterschiedliche Messwert-Signal-Kennlinien aufweisen, die in der jeweiligen Auswerteelektronik (4, 5) gespeichert werden.

7. Verfahren nach Anspruch 5 oder 6, wobei die Messwerte der Sensoren (2, 3) von einem gemeinsamen Elektronikmodul (16) periodisch nacheinander abgefragt, ausgewertet und miteinander verglichen werden, wobei das Ergebnis des Vergleichs angezeigt und/oder bei Abweichung von vorgegebenen Sollbedingungen eine Störmeldung ausgegeben wird.

## Claims

1. Assembly for measuring a mass flow or a volume flow of a flow on or in a device (1) through which a fluid can flow by means of electronic sensors (2, 3), wherein the device (1) through which the fluid can flow is a heating device operated with a fuel gas and the mass flow or the volume flow relates to the fuel gas, supplied ambient air and/or exhaust gas, **characterised in that** the assembly is configured to determine the mass flow or the volume flow by at least two independent measuring systems (51, S2) and wherein the two measuring systems (51, S2) are designed so that they differ in at least their tendency to become contaminated, and **in that** all of the sensors (2, 3) are accommodated in a common housing (15) and the first sensor (2) is arranged in a bypass line (11) and together with the bypass line (11) forms the first measuring system (51), and the second sensor (3) is arranged in a branch line (12) with an opening (13) to the environment (14) of the device (1) and together with the branch line (12) forms the second measuring system (S2), wherein each sensor (2, 3) is connected to evaluation electronics (4, 5) and the measured values determined by each evaluation electronics (4, 5) for the mass flow or the volume flow can be supplied to comparison electronics (6), which are configured to compare at least measured values of the mass flow or the volume flow or their behavior over time with one another in order to determine the contamination from deviations of the measured values from one another and to output results of the comparison in the form of an error log, a warning signal or a switch-off signal.

2. Assembly according to claim 1, **characterised in that** all of the sensors (2, 3) are mounted on a common circuit board (17).

3. Assembly according to claim 1, **characterised in that** all of the sensors (2, 3) are accommodated on a common chip.

4. Assembly according to any one of the preceding claims, wherein the evaluation electronics (4, 5) and the comparison electronics (6) are also arranged in the housing (15).

5. Method for measuring a mass flow or a volume flow of a flow on or in a device (1) through which a fluid can flow by means of electronic sensors (2, 3), wherein the device (1) through which the fluid can flow is a heating device operated with a fuel gas and the mass flow or the volume flow relates to the fuel gas, supplied ambient air and/or exhaust gas, **characterised in that** the method is performed with an assembly according to any one of the preceding claims.

6. Method according to claim 5, wherein the sensors (2, 3) have different measured value/signal characteristics which are stored in the respective evaluation electronics (4, 5).

7. Method according to claim 5 or 6, wherein the measured values of the sensors (2, 3) are periodically queried one after the other by a common electronic module (16), analyzed and compared with one another, wherein the result of the comparison is displayed and/or a fault message is output in the event of a deviation from predetermined setpoint conditions.

## Revendications

1. Agencement destiné à la mesure d'un débit massique ou d'un débit volumique d'un débit au niveau d'un dispositif (1) pouvant être traversé par un fluide ou dans celui-ci au moyen de capteurs électroniques (2, 3), dans lequel le dispositif (1) pouvant être traversé par le fluide est un appareil de chauffage alimenté par un gaz combustible et le débit massique ou le débit volumique concerne le combustible gazeux, l'air ambiant amené et/ou le gaz d'échappement, **caractérisé en ce que** l'agencement est configuré pour déterminer le débit massique ou le débit volumique par le biais d'au moins deux systèmes de mesure (S1, S2) indépendants et dans lequel les deux systèmes de mesure (S1, S2) sont conçus de telle sorte qu'ils se différencient au moins dans le degré de salissure et que tous les capteurs (2, 3) sont logés dans un boîtier (15) commun et le premier capteur (2) est disposé dans une conduite de dérivation (11) et forme conjointement avec la conduite de dérivation (11) le premier système de mesure (S1) et le second capteur (3) est disposé dans une conduite de raccordement (12) avec une ouverture (13) sur l'environnement immédiat (14) du dispositif (1) et forme conjointement avec la conduite de raccordement (12) le second système de mesure (S2), dans lequel chaque capteur (2, 3) est relié à une électronique d'évaluation (4, 5) et les données de mesure déterminées par chaque électronique d'évaluation (4, 5) pour le débit massique ou le débit volumique peuvent être amenées à une électronique de comparaison (6), laquelle est configurée pour comparer entre elles au moins des valeurs mesurées du débit massique ou du débit volumique ou leur comportement dans le temps pour tirer des conclusions sur les salissures à partir d'écarts dans les valeurs de mesure et donner des résultats de la comparaison sous la forme d'un protocole d'erreurs, d'un signal d'avertissement ou d'un signal de mise hors service.

2. Agencement selon la revendication 1, **caractérisé en ce que** tous les capteurs (2, 3) sont montés sur une platine (17) commune.

3. Agencement selon la revendication 1, **caractérisé en ce que** tous les capteurs (2, 3) sont logés sur une puce commune.

4. Agencement selon l'une quelconque des revendications précédentes, dans lequel les électroniques d'évaluation (4, 5) et l'électronique de comparaison (6) sont également disposées dans le boîtier (15).

5. Procédé pour destiné à la mesure d'un débit massique ou d'un débit volumique d'un débit au niveau d'un dispositif (1) pouvant être traversé par un fluide ou dans celui-ci au moyen de capteurs électroniques (2, 3), dans lequel le dispositif (1) pouvant être traversé par le fluide est un appareil de chauffage alimenté par un gaz combustible et le débit massique ou le débit volumique concerne le gaz combustible, l'air ambiant amené et/ou le gaz d'échappement, **caractérisé en ce que** le procédé est réalisé avec un agencement selon l'une quelconque des revendications précédentes.

6. Procédé selon la revendication 5, dans lequel les capteurs (2, 3) présentent des caractéristiques de signaux de valeurs de mesure différentes qui sont mémorisées dans l'électronique d'évaluation (4, 5) respective.

7. Procédé selon la revendication 5 ou 6, dans lequel les valeurs de mesure des capteurs (2, 3) sont interrogées périodiquement les unes après les autres, évaluées et comparées les unes aux autres, dans lequel le résultat de la comparaison est affiché et/ou un message d'erreur est émis en cas d'écart par rapport à des conditions théoriques prédéfinies.
